# EUROPÄISCHE PATENTANMELDUNG

(11) **EP 0 775 647 A1**
(43) Veröffentlichungstag der Anmeldung: **28.05.1997**
(21) Anmeldenummer: 96117671.6
(22) Anmeldetag: 05.11.1996
(51) Int. Cl.: B65G 15/08, B65G 15/40

(54) **Schlauchfördergurt**

(30) Priorität: 25.11.1995 DE 19544026
(71) Anmelder: Habasit GmbH, 63322 Rödermark (DE)
(72) Erfinder: Mayer, Werner, 67722 Winnweiler (DE); Friedmann, Rene, 63322 Rödermark (DE); Heinzler, Thomas, 64859 Eppertshausen (DE); Koch, Wolf-Dieter, 64859 Eppertshausen (DE); Plutte, Friedrich, 64297 Darmstadt (DE)
(74) Vertreter: Knoblauch, Andreas, Dr.-Ing.

(57) **Zusammenfassung**

Es wird ein Schlauchfördergurt (1) angegeben, mit dem die Förderung eines Schüttguts mit weniger Einschränkungen in Bezug auf den Förderweg möglich ist.

Hierzu weist der Schlauchfördergurt einen Traggurt (2) auf, der entlang seiner beiden Längsseiten mit je einem Treibriemen (3, 4) untrennbar verbunden ist.

## Beschreibung

Die Erfindung betrifft einen Schlauchfördergurt und ein Verfahren zu seiner Herstellung.

Für die Förderung von Schüttgütern, beispielsweise von Pulvern oder Granulaten, werden vielfach Fördergurte verwendet, auf die das Schüttgut aufgelegt wird. Diese Fördergurte haben zwar den Vorteil, daß sie für den Transport der Schüttgüter relativ wenig Energie benötigen. Der Transport ist jedoch auf ebene Strecken oder Strecken mit geringer Steigung beschränkt. Um größere Höhen oder Steigungen zu überwinden, ist die Übergabe auf ein anderes Transportsystem notwendig, beispielsweise auf einen Eimerkettenförderer.

Man hat daher versucht, einen Gurt schlauchförmig zu mulden und dann die beiden Gurtkanten überdecken zu lassen, so daß das Fördergut in einer Art Schlauch aufgenommen ist. Es hat sich allerdings herausgestellt, daß ein derartiger Schlauchfördergut zur Wahrung seiner Stabilität von vielen Rollen abgestützt werden muß, die teilweise sogar über den Umfang verteilt angeordnet sein müssen, um die Form aufrechtzuerhalten. Auch mit einem derartigen Schlauch lassen sich allerdings nennenswerte Steigungen nicht überwinden. Es ist schwierig, den Schlauch "dicht" zu bekommen, so daß ab Steigungen im Bereich von 30 bis 40° zu viel Fördergut herausfällt.

Der Erfindung liegt die Aufgabe zugrunde, Schüttgüter mit Hilfe eines Transportbandes mit geringeren Einschränkungen in Bezug auf den Förderweg fördern zu können.

Diese Aufgabe wird durch einen Schlauchfördergurt mit einem Traggurt, der entlang seiner beiden Längsseiten mit je einem Treibriemen untrennbar verbunden ist, gelöst.

Der Begriff "untrennbar" bedeutet hier, daß eine stoffschlüssige Verbindung, ein Verkleben oder eine einteilige Ausbildung von Traggurt und Treibriemen vorliegt. Natürlich wird man Traggurt und Treibriemen mit Gewalt voneinander trennen können. Dies führt dann aber zu einer Beschädigung. Im Gegensatz dazu kann man bei anderen Befestigungsarten, wie Vernähen, Vernieten oder Verschrauben durch Lösen oder Zerstören der jeweiligen Befestigungsmittel eine Trennung von Traggurt und Treibriemen herbeiführen.

Die Treibriemen können bei der Ausbildung des Schlauches aufeinander gelegt werden, wobei der Traggurt das Transportgut sozusagen einhüllt. Durch die Aufteilung des Schlauchfördergurts in einen Traggurt einerseits und zwei Treibriemen an den Längsseiten andererseits, erreicht man eine Entkoppelung der Transportaufgabe von der Antriebsaufgabe. Der Traggurt übernimmt den Transport des zu fördernden Gutes. Er muß nur dafür sorgen, daß das Fördergut in und auf dem Schlauchfördergurt festgehalten wird. Die Treibriemen übernehmen den Antrieb, treiben also den Traggurt und das Fördergut an. Hierbei ist von Bedeutung, daß der Traggurt mit den Treibriemen quasi einstückig ausgebildet ist. Da man aus vielerlei Gründen für den Traggurt und die Treibriemen gelegentlich jeweils andere Materialien verwenden wird, muß man diese Materialien miteinander verbinden. Diese Verbindung ist nun stoffschlüssig ausgebildet, d.h. sie verbindet die Treibriemen mit dem Traggurt so, daß sie praktisch als eine Einheit handhabbar sind. Diese Verbindung kann auch schon bei der Herstellung erzeugt werden, wenn beispielsweise Treibriemen und Traggurt zusammen in einem Stück hergestellt werden, beispielsweise durch Extrudieren, Auswalzen oder ähnliches. Durch diese Verbindung wird keine Schwächung des Schlauchfördergurtes bewirkt. Dies ist von erheblicher Bedeutung, weil der Schlauchfördergurt, der als geschlossener Gurt ausgebildet ist und im Kreislauf bewegt wird, beim Durchlaufen seines Transportweges einer Vielzahl von Biegespielen ausgesetzt ist, die bei einer anderen Verbindungsart das Risiko einer dauerhaften Beschädigung des Schlauchfördergurts in sich tragen. Dadurch, daß man den Traggurt anders ausbilden kann als die Treibriemen, kann man die Treibriemen unter anderem auch im Hinblick auf einen guten Verschluß des Schlauchfördergurts hin auswählen, denn die Treibriemen sind die Teile, die beim Verschließen des Schlauchfördergurts aufeinander oder aneinander angelegt werden. Die Treibriemen sind relativ flache, bandartige oder bandförmige Gebilde. Sie werden flach aufeinandergelegt. Das im geschlossenen Gurt befindliche Transportgut drückt dann den innenliegenden Treibriemen gegen die Innenseite des außenliegenden Treibriemens, der wiederum von Transportrollen oder ähnlichem unterstützt werden kann. Damit reicht der Verschluß, der durch das flächige Aneinanderlegen der Treibriemen gebildet wird, aus, um das zu fördernde Gut im Innern des Schlauchförderguts zu halten.

Hierbei ist von Vorteil, daß der Traggurt mit den Treibriemen in Längsrichtung kontinuierlich verbunden ist. Die Längsrichtung ist hierbei die Richtung, in der der Schlauchfördergurt bewegt wird. Durch diese Verbindungsart ergibt sich eine Homogenität des Schlauchfördergurts in Längsrichtung, die sich günstig auf die Stabilität im Betrieb auswirkt. Wenn der Schlauchfördergurt beispielsweise abschnittsweise unterschiedliche Biegesteifigkeiten aufweist, kann dies zu einer Überbeanspruchung von einzelnen Abschnitten mit nachfolgender Bruchgefahr führen. Wenn hingegen der Aufbau in Längsrichtung homogen ist, ist diese Gefahr wesentlich geringer. Darüber hinaus sichert diese Art der Verbindung, daß kein Fördergurt zwischen Traggurt und Treibriemen hindurchgelangen kann. Damit werden Verluste beim Transport vermieden.

Mit Vorteil ist der Traggurt mit den Treibriemen verklebt oder verschweißt. Dies sind relativ einfach zu realisierende stoffschlüssige Verbindungen. Beim Verkleben ist es nicht unbedingt notwendig, daß ein Klebstoff zwischen Traggurt und Treibriemen angeordnet wird. Bei einigen Kunststoffen reicht es auch aus, den Kunststoff eines der beiden Teile an seiner Oberfläche anzulösen und dann mit dem Kunststoff des anderen der beiden Teile zu verbinden, wobei gelegentlich die Anwendung von Druck erforderlich ist. Zum Verschweißen wird eine höhere Temperatur benötigt. Diese kann z.B. durch Infrarotbestrahlung, Hochfrequenz, Warmluft etc. erzeugt werden.

Vorzugsweise weisen die Treibriemen in Querrichtung eine größere Biegesteifigkeit als der Traggurt auf. Die Treibriemen sorgen dafür, daß der Schlauchfördergurt vollständig geschlossen werden kann, so daß auch bei feinen Pulvern als Transportgut praktisch kein Verlust stattfindet. Sie weisen daher vorzugsweise eine hohe Quersteifigkeit, eine glatte Oberfläche auf der dem Transportgut zugewandten Seite (um Anhaften von Transportgut zu verhindern) und gegebenenfalls einen hohen Reibwert auf. Man kann dadurch die Treibriemen praktisch eben aneinander anlegen, wenn der Schlauchfördergurt geschlossen wird. Auch die Auflage des Schlauchfördergurts auf Transportrollen oder Umlenkrollen kann dann auf den Treibriemen erfolgen, wodurch einerseits eine große Stabilität des Schlauchfördergurts im gefüllten Zustand erreicht wird und andererseits der Schlauchfördergurt auch mit einer großen Sicherheit geschlossen ist und geschlossen bleibt. Die geringere Biegesteifigkeit des Traggurts gestattet hingegen, daß sich der Traggurt gut an das eingelagerte Füllgut anpaßt. Eine noch bessere Förderleistung wird insbesondere bei geradlinig verlaufenden Förder-Teilstrecken dadurch erreicht, daß der geschlossene Schlauchfördergurt etwas um seine Längsachse verdreht wird. Der Traggurt ist ebenfalls ein flaches Band, das allerdings in der Regel breiter als die Treibriemen sein wird.

Auch ist von Vorteil wenn die Treibriemen eine geringere Längsflexibilität als der Traggurt aufweist. Die Treibriemen werden bei Umlenkungen in der Regel "innen" liegen. Der Traggurt muß also stärker gedehnt werden können, was aufgrund seiner höheren Flexibilität ohne weiteres möglich ist.

Bevorzugterweise weisen die Treibriemen eine höhere Zugfestigkeit als der Traggurt auf. Durch die höhere Zugfestigkeit kann der Traggurt in Förderrichtung stärker belastet werden, um beispielsweise auftretende Widerstände, wie Lagerreibung, zu überwinden. Die höhere Zugfestigkeit entspricht einem höheren E-Modul in Längsrichtung.

Vorzugsweise ist der Traggurt an mindestens einer Oberfläche mit den Treibriemen verbunden, wobei die Treibriemen die Längskanten des Traggurts zumindest teilweise abdecken. Der Traggurt ist also sozusagen in die Treibriemen eingesetzt. Hierbei gewährleistet die Verbindung der Oberfläche des Traggurtes mit der jeweiligen Oberfläche des Treibriemens, daß die drei Teile zuverlässig zusammenhalten. Wenn aber zusätzlich noch die Längskante des Traggurtes zumindest teilweise abgedeckt ist, verbessert sich die Verbindung noch weiter. Insbesondere ist diese Art der Verbindung im Hinblick auf die zu erwartenden vielen Biegespiele von Vorteil.

Hierbei ist besonders bevorzugt, daß die Treibriemen mit den Längskanten des Traggurts verbunden sind. Man erreicht hierdurch nicht nur eine Befestigung der Treibriemen am Traggurt parallel zur Ebene dieser bandförmig ausgebildeten Riemen und Gurte, sondern auch zusätzlich noch eine Verbindung senkrecht dazu. Durch diese "dreidimensionale" Verbindung wird die Zuverlässigkeit der Befestigung der Treibriemen am Traggurt weiter erhöht.

Vorzugsweise sind die Treibriemen auf einem Teil ihrer Breite gespalten, wobei der Traggurt im Spalt angeordnet ist. Hierdurch läßt sich der Traggurt auf seiner Oberseite und seiner Unterseite mit den Treibriemen verbinden, ohne daß zusätzliche Maßnahmen notwendig sind. Dennoch bleiben die Treibriemen als einstückige Gebilde erhalten, die den Traggurt umfassen.

Mit Vorteil ersetzt der Traggurt im Spalt zumindest einen Teil des Volumens des Treibriemens. Hierdurch wird erreicht, daß sich die Dicke des Treibriemens trotz des Einsetzens des Traggurtes nicht nennenswert erhöht. Es entsteht allenfalls eine kleine Stufe in Querrichtung, die aber kleiner sein kann als die Dicke des Traggurts.

Vorzugsweise weist jeder Treibriemen eine Oberflächenschicht auf, die nur auf einem Teil der Breite des Treibriemens angeordnet ist, wobei der Traggurt im verbleibenden Teil der Breite angeordnet ist und sowohl die Oberflächenschicht als auch der Traggurt auf einer Unterlage mit der Breite des Treibriemens befestigt sind. Bei dieser Ausgestaltung hat also der Traggurt einen Teil der Oberflächenschicht des Treibriemens ersetzt. Auch hierdurch läßt sich die gewünschte Befestigung an einer Oberfläche des Traggurtes und an seiner Längskante erreichen.

Mit Vorteil besteht die Oberflächenschicht der Treibriemen aus dem gleichen oder im Hinblick auf Verschweißungs- oder Verklebungseigenschaften mit der Unterlage der Treibriemen ähnlichen Material wie der Traggurt. Hierdurch wird sichergestellt, daß der Traggurt mit der Unterlage des Treibriemens genauso gut und zuverlässig verbunden werden kann wie die Oberflächenschicht. Bei der Befestigung der Oberflächenschicht auf der Unterlage des Treibriemens hat man aber bereits Erfahrungen sammeln können, so daß man diese Erfahrungen nun problemlos auf die Fertigung des Schlauchfördergurtes übertragen kann.

Mit Vorteil sind zumindest die einem Tansportgurt zugewandten Oberflächen aus einem für Lebensmittel geeigneten Material gebildet. Der Schlauchfördergurt läßt sich dann auch für das Fördern von Lebensmitteln oder Lebensmittelkomponenten (FDA/USDA konform) verwenden.

Mit Vorteil ist der Traggurt als Folie ausgebildet, deren Werkstoff aus der Gruppe der thermoplastischen Polyurethane, der Polyether-Block-Amide und Polyolefine ausgewählt ist. Insbesondere die thermoplastischen Polyurethane sind lebensmitteltauglich. Die Oberfläche ist in der Regel glatt und nicht adhesiv.

Auch ist von Vorteil, wenn die Verbindung zwischen Traggurt und Treibriemen frei von Klebstoff ist. Insbesondere bei der Verwendung im Lebensmittelbereich bestehen dann keine zusätzlichen Risiken.

Die Erfindung betrifft auch ein Verfahren zum Herstellen eines Schlauchfördergurtes, bei dem der Traggurt entlang seiner Längsseiten mit je einem Treibriemen verschweißt oder verklebt wird. Durch diese Ausgestaltung läßt sich der oben beschriebene Schlauchfördergurt einfach und preisgünstig herstellen.

Hierbei ist bevorzugt, daß jeder Treibriemen vor dem Verbinden mit einem in Längsrichtung verlaufenden Schlitz in seiner Längskante versehen wird, in den der Traggurt eingefügt wird. Hierdurch läßt sich eine Verbindung des Treibriemens mit dem Traggurt auf zwei Oberflächen des Traggurtes erreichen, wodurch die Verbindung sehr stabil wird.

Von Vorteil ist hierbei, daß vor dem Einfügen des Traggurts Material aus dem Schlitz entfernt wird. Der Traggurt ersetzt dann sozusagen dieses Material des Treibriemens. Hierdurch läßt sich eine Stufe auf dem Treibriemen vermeiden oder klein halten.

In einer alternativen Ausgestaltung ist vorgesehen, daß bei jedem Treibriemen eine Oberflächenschicht auf einem Teil seiner Breite abgenommen wird, wobei der Traggurt an die Stelle der Oberflächenschicht gesetzt wird. Auch hierdurch läßt sich eine relativ glatte Oberfläche trotz der Verbindung des Traggurtes mit den Treibriemen erreichen. Die Verbindung zwischen dem Traggurt und den Treibriemen wird relativ stabil.

In einer bevorzugten Ausgestaltung werden der Traggurt und die Treibriemen unter Anwendung von Hitze und Druck miteinander verbunden. Insbesondere bei der Verwendung von Kunststoffen zumindest im Bereich der Verbindungsflächen zwischen Traggurt und Treibriemen läßt sich hierdurch sehr einfach ein Verkleben oder Verschweißen erzielen, wobei eine gute Stabilität der Verbindung erreicht wird.

Die Erfindung wird im folgenden anhand von bevorzugten Ausführungsbeispielen in Verbindung mit der Zeichnung beschrieben. Hierin zeigen:
- Fig. 1: einen Schlauchfördergurt in Transportstellung,
- Fig. 2: eine erste Ausgestaltung eines Schlauchfördergurts in perspektivischer Darstellung, teilweise im Schnitt,
- Fig. 3: eine zweite Ausgestaltung eines Schlauchfördergurts und
- Fig. 4: eine dritte Ausgestaltung eines Schlauchfördergurts.

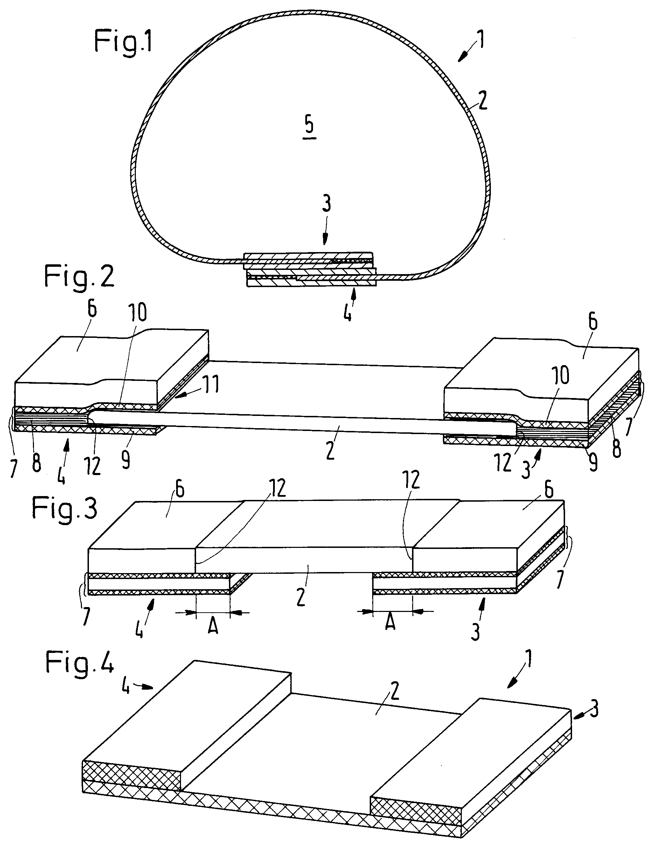

Ein Schlauchfördergurt 1 weist einen Traggurt 2 auf, der entlang seiner beiden Längsseiten mit je einem Treibriemen 3, 4 versehen ist. Zum Transport werden die beiden Treibriemen, die zumindest in Querrichtung eine größere Biegesteifigkeit als der Traggurt 2 aufweisen, aufeinander gelegt. Aufgrund ihrer größeren Steifigkeit kann man erreichen, daß sie praktisch eben aufeinander liegen. Der Traggurt 2 bildet dann eine Wölbung, wie dies in Fig. 1 dargestellt ist. Die Wölbung umschließt einen Transportraum 5, der mit Fördergut gefüllt ist. Das Fördergut drückt hierbei nach außen. Die beiden Treibriemen 3, 4 sind bandförmig, also im wesentlichen eben, ausgebildet und werden beim Transport flach aufeinandergelegt, so daß der Traggurt 2 im geschlossenen Zustand des Schlauchfördergurts 1 jeweils nach links und rechts (gesehen im Bewegungsrichtung) von den zusammengelegten Treibriemen 3, 4 wegläuft, bevor er sich wölbt.

Der Traggurt 2 stellt sicher, daß hohe Füllgrade erreicht werden. Er weist hierzu eine hohe Elastizität in alle Richtungen auf und ist in hohem Maße knickstabil, hält also eine Vielzahl von Knick- oder Biegespielen aus, ohne zu ermüden oder zu verspröden. Die Oberfläche ist so ausgebildet, daß Transportgut nicht anhaftet, muß also gegebenenfalls auf den Einzelfall abgestimmt werden.

Zum Füllen wird der Schlauchfördergurt 1 zweckmäßigerweise um 180° nach oben gedreht, so daß nach dem Auseinanderbewegen der Treibriemen 3, 4 eine nach oben gerichtete Öffnung vorhanden ist, in die das Transportgut eingefüllt werden kann.

Zum Führen des Schlauchfördergurts 1 reicht es aus, wenn die zusammengelegten Treibriemen 3, 4 auf Führungsrollen bewegt werden. Man kann mit einem derartigen Schlauchfördergurt auch nahezu senkrecht der Förderstrecken überwinden. Wenn gerade Abschnitte einer derartigen Förderstrecken eine gewisse Länge überschreiten, kann es zweckmäßig sein, den Schlauchfördergurt 1 in sich zu verdrehen, so daß die zusammengelegten Treibriemen 3, 4 eine Art Spirale bilden. Dies verbessert die Stabilität des Schlauchfördergurts 1 in der Fig. 1 dargestellten Position. Je höher die Geschwindigkeit ist, desto steiler können Steigungen sein.

Wesentlich hierbei ist, daß die Treibriemen 3, 4 richtig mit dem Traggurt 2 verbunden werden, um die notwendige Stabilität zu gewährleisten.

Fig. 2 zeigt den Schlauchfördergurt der Fig. 1 in aufgeklapptem Zustand teilweise im Schnitt, wobei perspektivisch ein relativ kurzes Stück in Längsrichtung dargestellt ist. In Wirklichkeit ist der Schlauchfördergurt 1 als endlos umlaufendes Band ausgebildet, dessen Länge mehrere Meter, mehrere zehn Meter oder sogar mehrere hundert Meter betragen kann.

Der Traggurt 2 ist in der Ausgestaltung der Fig. 2 aus einem thermoplastischen Polyurethan gebildet. Das thermoplastische Polyurethan liegt als Folie vor.

Die Treibriemen 3, 4 bestehen aus mehreren Schichten und zwar aus einer Oberflächenschicht 6, die beispielsweise ebenfalls aus thermoplastischem Polyurethan gebildet sein kann, und einer Unterlage 7 oder einem Unterteil, das ein Gewebe 8 aufweist, das auch imprägniert sein kann. Das Gewebe 8 bildet hierbei eine Zug tragende Einlage, so daß Zugkräfte problemlos aufgenommen werden können. Im Gegensatz dazu ist der Traggurt 2 frei von Zug aufnehmenden Einlagen. Das Gewebe 8 ist beidseitig mit einem Kunststoff 9, 10 beschichtet, wobei der Kunststoff 9, 10 das Gewebe zumindest teilweise durchdringt bzw. einbettet. Der Kunststoff 9 bildet eine Laufseite, die im Betrieb an Laufrollen anliegt. Der Kunststoff 10 stellt die Verbindung zum Oberteil 6 sicher. Die Kunststoffe 9, 10 können beispielsweise ebenfalls aus der Gruppe der thermoplastischen Polyurethane oder Polyolefine ausgewählt sein. Die Kunststoffe sollten verschmelzbar sein, um ein endloses Band herstellen zu können.

Die Befestigung des Traggurtes 2 an den Treibriemen 3, 4, die auch als Treibbänder oder Treibgurte bezeichnet werden können, erfolgt hier dadurch, daß in den Treibriemen 3, 4 jeweils ein Längsschlitz 11 über die gesamte Länge eingebracht wird. Der Längsschlitz hat eine Breite, die etwa der Hälfte der Breite des Treibriemens 3, 4 entspricht. Aus diesem Schlitz 11 kann man einen Teil des Materials des Treibriemens 3, 4 entnehmen, im vorliegenden Fall also beispielsweise einen Teil der Gewebeschicht 8. In diesem gegebenenfalls ausgehöhlten Schlitz 11 wird die den Traggurt 2 bildende Folie eingelegt. Unter Anwendung von Druck und erhöhter Temperatur werden dann die Oberseite und die Unterseite der Treibriemen 3, 4 gegeneinander gepreßt. Hierbei wird der Traggurt 2 mit den Treibriemen 3, 4 verschweißt. Der Abstand und die Stärke der verschiedenen Materialien können hierbei mittels Hilfsblechen ausgeglichen werden, die gegebenenfalls zum Vermeiden von Anhaften mit Polytetrafluorethylen oder ähnlichem beschichtet sein können.

Der Druck und die Temperatur sowie die anzuwendenden Zeiten richten sich nach den verwendeten Werkstoffen. Insgesamt ist davon auszugehen, daß die Temperatur im Bereich von 100°C bis 200°C liegen kann, während der Druck im Bereich von 0,5 bis 2 bar liegen kann.

Bei dieser Ausgestaltung wird sowohl die Oberseite als auch die Unterseite des Traggurts 2 jeweils mit den Treibriemen 3, 4 verbunden. Die Längskante 12 des Traggurts 2 ist von den Treibriemen 3, 4 vollständig abgedeckt. Beim Verschweißen wird sich auch eine Verbindung zwischen der Längskante 12 des Traggurts 2 mit den Treibriemen 3, 4 ergeben.

Anstelle eines thermoplastischen Polyurethans kann man für den Traggurt 2 auch einen Werkstoff verwenden, der aus der Gruppe der Polyether-Block-Amide ausgewählt ist.

Fig. 3 zeigt eine alternative Ausgestaltung, bei der der Traggurt 2 auf eine etwas andere Art mit den Treibriemen 3, 4 verbunden worden ist. Die Treibriemen 3, 4 werden hierbei nicht gespalten. Vielmehr wird vom Oberteil 6 ein Teil der Breite in dem dem Traggurt 2 zugewandten Bereich entfernt. Dieser Bereich ist in Fig. 3 mit A gekennzeichnet. Im Bereich A besteht der Treibriemen 3, 4 also nur noch aus dem Unterteil, das hier als Unterlage 7 für den Traggurt 2 dient. In den durch das Abschälen der Schicht des Oberteils 6 entstandenen Raum wird nun der Traggurt 2 eingelegt und zwar so, daß seine Längskante 12 an die das Oberteil 6 bildende Schicht anstößt. Auch hierbei ist die Längskante 12 zumindest teilweise, bevorzugterweise aber vollständig, abgedeckt. Wenn nun der Traggurt 2 mit den Treibriemen 3, 4 verschweißt wird, ergibt sich zum einen eine Verbindung an der Unterseite des Traggurts 2 mit der Unterlage 7 im Bereich A der Treibriemen 3, 4 und zum anderen eine Verbindung der Längskante 12 mit dem Oberteil 6 der Treibriemen 3, 4.

Das Verschweißen kann beispielsweise unter laufend geheizten Walzen oder einer Doppelbandpresse erfolgen, um den notwendigen Druck und die notwendige Temperatur aufzubringen. Mit Hilfe der Walzen läßt sich ein kontinuierlicher Prozeß bei der Herstellung eines derartigen Schlauchfördergurtes realisieren. Gegebenenfalls kann man den Schlauchfördergurt nach dem Verschweißen kühlen, wobei Walzen verwendet werden können, die hier als Kühlwalzen dienen. Druck und Temperatur sowie die einzelnen Behandlungszeiten sind von den verwendeten Kunststoffen abhängig.

Fig. 4 zeigt eine dritte Ausgestaltung, bei der der Traggurt 2 sich über die volle Breite des Schlauchfördergurts 1 erstreckt. Entlang der Ränder des Traggurts 2 sind die Treibriemen 3, 4 aufgeklebt. Der Traggurt 2 ist hier durch eine Folie gebildet, deren Werkstoff aus der Gruppe der Polyether-Block-Amide gewählt worden ist. Eine derartige Folie wird unter der Bezeichnung F109 von der Habasit GmbH, DE-63322 Rödermark, vertrieben. Die Treibriemen 3, 4 können genauso ausgebildet sein, wie in den Fig. 1 bis 3. Sie weisen beispielsweise ein imprägniertes oder nicht imprägniertes Gewebe auf, das mit einem thermoplastischen Polyurethan beschichtet ist, wobei auf der Transportseite eine Oberflächenschicht aus thermoplastischem Polyurethan aufgebracht ist. Ein derartiger Treibriemen wird beispielsweise unter der Bezeichnung FNB-8E von der Habasit GmbH, DE-63322 Rödermark, vertrieben.

Die Treibriemen 3, 4 können mit dem Traggurt unter Anwendung eines 2-Komponenten-Klebers, wie er beispielsweise unter der Bezeichnung "Polycol A+B" oder "Primecol A+B" von der Habasit GmbH, DE-63322 Rödermark, vertrieben wird, miteinander verbunden werden. Hierbei kann ebenfalls ein erhöhter Druck und eine erhöhte Temperatur zur Anwendung kommen. Zweckmäßigerweise werden hierbei der Traggurt 2 und die Treibriemen 3, 4 an ihren Klebeflächen aufgerauht, mit dem Kleber bzw. einer Komponente davon bestrichen und nach Ablüften und einem weiteren Einstreichen fixiert und gepreßt.

In jedem Fall erfolgt durch das Verschweißen oder das Verkleben des Traggurts 2 mit den Treibriemen 3, 4 eine kontinuierliche Verbindung dieser Teile miteinander. Damit bleibt die Längsflexibilität und die Zugfestigkeit in Längsrichtung praktisch konstant. Weder der Traggurt 2 noch die Treibriemen 3, 4 werden bei der Verbindung beschädigt. Damit entstehen keine Störstellen, die beim späteren Betrieb des Schlauchfördergurts 1 zu einer lokalen Überbeanspruchung mit der Gefahr einer Rißbildung führen könnten. Vielmehr läßt sich mit dem knickstabilen Traggurt 2, der eine Vielzahl von Öffnungs- und Schließbewegungen durchführen muß, eine lange Lebensdauer realisieren. Die Treibriemen 3, 4 müssen hauptsächlich nur in Längsrichtung gebogen werden. Wenn man ihre Armierung, d.h. den Aufbau mit Zug aufnehmenden Einlagen, entsprechend darauf abstellt, läßt sich auch hier die entsprechende hohe Lebenserwartung realisieren.

Neben den dargestellten Herstellungsverfahren, bei denen der Schlauchfördergurt 1 aus mehreren, gegebenenfalls unterschiedlichen Zwischenprodukten hergestellt wird, ist es auch möglich, den Schlauchfördegurt durch eine gemeinsame Extrusion (Koextrusion) herzustellen, bei der die Materialien, aus denen die Treibriemen 3 und der Traggurt 2 gebildet sind, zusammen mit einem textilen Flächengebilde oder einer Fadenschar extrudiert werden.

Als Materialien für den Tragriemen kommt z.B. beidseitig beschichtetes Aramid, PES, PA, PP (Kette) / PES, PA-6, -66, PP, PEEK (Schuß) Gewebe oder Gewirke in Betracht. Die Beschichtung kann beidseitig gleich oder unterschiedlich sein. Gegebenenfalls kann man auf der einen Seite eine Beschichtung vorsehen, die einen besseren Reibwert hat als die andere Seite. Dies wird dann die Seite sein, die auf den Trag-, Antriebs- oder Führungsrollen aufliegt. Mit Aramid können große Umfangskräfte realisiert werden bei gleichzeitig hoher Längsflexibilität.

Zusätzlich oder alternativ dazu können auch zwei Gewebe mit gleichem oder ähnlichem Aufbau (beispielsweise Kette multifil, Schuß monofil oder imprägnierter multifil) verwendet werden, wovon eines einseitig und das andere zweiseitig beschichtet ist. Diese beiden Gewebe werden laminiert. Durch eine geeignete Kombination der Gewebe, Schichtdicken und Beschichtungsmaterialien werden die gewünschten Verhältnisse in Bezug auf E-Modul in Längsrichtung, Längsflexibilität und Quersteifigkeit erreicht. In vielen Fällen wird es auch ausreichen, zwei Gewebe zu verwenden, die beide einseitig beschichtet sind, und diese zu laminieren.

Der Traggurt hat vorzugsweise einen monolitischen Aufbau. Bevorzugterweise verwendet man hierzu eine koextrudierte Folie zur Erreichung idealer Dehneigenschaften, Knickverhalten, Weiterreißeigenschaften etc. Natürlich kann man auch hier ein ein- oder zweiseitig beschichtetes Gewebe, Gewirke oder Gestricke verwenden, das gegebenenfalls elastisch sein sollte.

Schließlich kann man den Schlauchfördergurt auch insgesamt einstückig herstellen, beispielsweise durch Koextrusion, gegebenenfalls bei gleichzeitiger Extrusionsbeschichtung, oder Pultrusion. Wenn man auf Garne oder ander zugtragende Elemente verzichten will, kann man bei kurzen Förderstrecken die entsprechende Stabilität (notwendiger E-Modul) auch durch Recken einer derartigen koextrudierten Folie erzielen.

Die zugtragenden Einlagen werden vorzugsweise gebildet durch Kettfäden aus einem oder mehreren der Werkstoffe Aramid, Polyester, Polyamid, Stahl oder Carbonfasern. Die Schußfäden sind vorzugsweise monofil ausgebildet und bestehen aus einem oder mehreren der Werkstoffe Polyester, Stahl, Aluminium, Glas, Polyvenylalkohol, Polyethylen, Polyproplyen oder mit Kunststoffen getränkte Multifilfasern aus Carbon. Für eine elastische Zwischenschicht oder eine Deckschicht kann man einen der Werkstoffe aus Polyurethan, Polyvenylchlorid, Polyamid, Polyolefine, thermoplastischem Elastomer, Nitril-Butadien-Kautschuk, Hytrel®, Pebax® oder einer Mischung dieser Werkstoffe bestehen.

Von den dargestellten Ausführungsformen kann in vielerlei Hinsicht abgewichen werden. Die Treibriemen müssen z.B. nicht unbedingt unter dem Traggurt angeordnet sein. Sie können auch auf dem Traggurt befestigt werden, also an seiner Oberseite. Schließlich ist es auch möglich, einen Treibriemen oberhalb und einen Treibriemen unterhalb des Traggurts anzuordnen oder einen oder beide Treibriemen in Querrichtung neben dem Traggurt.

## Patentansprüche

1. Schlauchfördergurt (1) mit einem Traggurt (2), der entlang seiner beiden Längsseiten (12) mit je einem Treibriemen (3, 4) untrennbar verbunden ist.

2. Schlauchfördergurt nach Anspruch 1, dadurch gekennzeichnet, daß der Traggurt (2) mit den Treibriemen (3, 4) in Längsrichtung kontinuierlich verbunden ist.

3. Schlauchfördergurt nach Anspruch 1 oder 2, dadurch gekennzeichnet, daß der Traggurt (2) mit den Treibriemen (3, 4) verklebt oder verschweißt ist.

4. Schlauchfördergurt nach einem der Ansprüche 1 bis 3, dadurch gekennzeichnet, daß die Treibriemen (3, 4) in Querrichtung eine größere Biegesteifigkeit als der Traggurt (2) aufweisen.

5. Schlauchfördergurt nach einem der Ansprüche 1 bis 4, dadurch gekennzeichnet, daß die Treibriemen (3, 4) eine geringere Längsflexibilität als der Traggurt (2) aufweist.

6. Schlauchfördergurt nach einem der Ansprüche 1 bis 5, dadurch gekennzeichnet, daß die Treibriemen (3, 4) eine höhere Zugfestigkeit als der Traggurt (2) aufweist.

7. Schlauchfördergurt nach einem der Ansprüche 1 bis 6, dadurch gekennzeichnet, daß der Traggurt (2) an mindestens einer Oberfläche mit den Treibriemen (3, 4) verbunden ist, wobei die Treibriemen (3, 4) die Längskanten (12) des Traggurts (2) zumindest teilweise abdecken.

8. Schlauchfördergurt nach Anspruch 7, dadurch gekennzeichnet, daß die Treibriemen (3, 4) mit den Längskanten (12) des Traggurts (2) verbunden sind.

9. Schlauchfördergurt nach einem der Ansprüche 1 bis 8, dadurch gekennzeichnet, daß die Treibriemen (3, 4) auf einem Teil ihrer Breite gespalten sind, wobei der Traggurt (2) im Spalt (11) angeordnet ist.

10. Schlauchfördergurt nach Anspruch 9, dadurch gekennzeichnet, daß der Traggurt (2) im Spalt (11) zumindest einen Teil des Volumens des Treibriemens (3, 4) ersetzt.

11. Schlauchfördergurt nach einem der Ansprüche 1 bis 8, dadurch gekennzeichnet, daß jeder Treibriemen (3, 4) eine Oberflächenschicht (6) aufweist, die nur auf einem Teil der Breite des Treibriemens (3, 4) angeordnet ist, wobei der Traggurt (2) im verbleibenden Teil (A) der Breite angeordnet ist und sowohl die Oberflächenschicht (6) als auch der Traggurt (2) auf einer Unterlage (7) mit der Breite des Treibriemens (3, 4) befestigt sind.

12. Schlauchfördergurt nach Anspruch 11, dadurch gekennzeichnet, daß die Oberflächenschicht (6) der Treibriemen (3, 4) aus dem gleichen oder im Hinblick auf Verschweißungs- oder Verklebungseigenschaften mit de Unterlage (7) der Treibriemen (3, 4) ähnlichen Material wie der Traggurt (2) besteht.

13. Schlauchfördergurt nach einem der Ansprüche 1 bis 12, dadurch gekennzeichnet, daß zumindest die einem Tansportgut zugewandten Oberflächen aus einem für Lebensmittel geeigneten Material gebildet sind.

14. Schlauchfördergurt nach einem der Ansprüche 1 bis 13, dadurch gekennzeichnet, daß der Traggurt als Folie ausgebildet ist, deren Werkstoff aus der Gruppe der thermoplastischen Polyurethane und der Polyether-Block-Amide ausgewählt ist.

15. Schlauchfördergurt nach einem der Ansprüche 1 bis 14, dadurch gekennzeichnet, daß die Verbindung zwischen Traggurt (2) und Treibriemen (3, 4) frei von Klebstoff ist.

16. Verfahren zum Herstellen eines Schlauchfördergurtes nach einem der Ansprüche 1 bis 15, dadurch gekennzeichnet, daß der Traggurt (2) entlang seiner Längsseiten mit je einem Treibriemen (3, 4) verschweißt oder verklebt wird.

17. Verfahren nach Anspruch 16, dadurch gekennzeichnet, daß jeder Treibriemen (3, 4) vor dem Verbinden mit einem in Längsrichtung verlaufenden Schlitz (11) in seiner Längskante versehen wird, in den der Traggurt (2) eingefügt wird.

18. Verfahren nach Anspruch 17, dadurch gekennzeichnet, daß vor dem Einfügen des Traggurts (2) Material aus dem Schlitz (11) entfernt wird.

19. Verfahren nach Anspruch 16, dadurch gekennzeichnet, daß bei jedem Treibriemen (3, 4) eine Oberflächenschicht (6) auf einem Teil (A) seiner Breite abgenommen wird, wobei der Traggurt (2) an die Stelle der Oberflächenschicht gesetzt wird.

20. Verfahren nach einem der Ansprüche 16 bis 19, dadurch gekennzeichnet, daß der Traggurt (2) und die Treibriemen (3, 4) unter Anwendung von Hitze und Druck miteinander verbunden werden.
